# EUROPEAN PATENT SPECIFICATION

(11) **EP 0 713 640 B1**
(45) Date of publication and mention of the grant of the patent: **05.07.2000**
(21) Application number: 95203164.9
(22) Date of filing: 20.11.1995
(51) Int. Cl.: A01D 78/10, A01D 80/00

(54) **A hay-making machine**
Heumaschine
Machine de fenaison

(30) Priority: 24.11.1994 NL 9401965
(43) Date of publication of application: 29.05.1996
(73) Proprietor: MAASLAND N.V., 3155 PD Maasland (NL)
(72) Inventor: Beije, Marinus, NL-2991 BV Barendrecht (NL); van den Engel, Alfonsus Jacobus, NL-3137 KC Vlaardingen (NL)
(74) Representative: Corten, Maurice Jean F.M.

(56) References cited:
- EP-A- 0 332 835
- EP-A- 0 508 200
- EP-A- 0 614 604
- DE-A- 4 003 203
- DE-A- 4 122 072
- FR-A- 2 146 674
- US-A- 2 620 203

## Description

The present invention relates to a hay-making machine comprising at least one rake member, that is rotatable about an upwardly extending shaft, for cultivating crop lying on the soil, which rake member is supported from the soil via a pair of wheels adapted to swivel about a swivel shaft arranged transversely to the direction of travel A, which pair of wheels includes at least two wheels, one of which is located in front of the swivel shaft and one therebehind.

Such a machine is known from European patent application no. 89101980/0332835 or from German application no. DE-A-4 122 072. In this known construction, the wheels of the machine follow the outlines of possible unevennesses in the soil as occurring in the direction of travel. Following them completely is disadvantageous due to the fact that the rake members, which, in this construction, are situated outside the reach of the wheels relative to the mounting point of the supporting member, may get into the soil or may, on the contrary, deflect vertically therefrom upon passing of the wheels of such an unevenness. This may result in that soil is shovelled into the crop to be raked, that the cultivating member or an other machine part collapses, or, in case of an upward deflection, that the crop remains on the soil without having been raked. The present invention provides a solution to this problem by eliminating, or at least reducing, a great deal of the disadvantages described, so as to obtain a better operating machine.

According to the invention, the solution consists in that the swivel shaft is provided at an angle of at least 5° relative to the horizontal in such a way that, upon swivelling, the wheels of the pair are subjected to a lateral deflection from their normal operating position. Such a construction has the effect that a wheel, upon passing e.g. a stone or a bowl-shaped recess in the soil, is subjected to a sideward tendency, so that, at least in many cases, it will avoid a possible unevenness in the soil prior to reaching its otherwise maximum vertical deflection. According to the invention, the angle desired for the sideward deflection has to be chosen depending on the distance from a wheel to the swivel shaft, but should be at least 5°. In a preferred embodiment, in which the mutual distance between the wheel shafts measured in the direction of travel is about 1.5 times the wheel diameter, the relevant angle of the swivel shaft will be approximately 10°.

In a specific embodiment, the pair of wheels constitutes part of a supporting member which includes two pairs of two wheels. According to the invention, from a constructional point of view, the above-mentioned solution is obtained in an advantageous manner when the machine is provided with a supporting member including a crossbeam that is orientated substantially transversely to the direction of travel and, from near its longitudinal centre, extends laterally in a downward direction. The crossbeam includes, in its alignment, the swivel shaft for a pair of wheels. In this manner, there will be created from the centre of the machine more freedom of movement on the soil as well as a favourable absorption of the forces exerted vertically on the machine.

According to a particular aspect of the invention, the supporting member is provided at least substantially at the front side of the transverse centre line of a cultivating member. As a consequence, there will be obtained a considerable restriction in the vertical deflection of the cultivating members at the front side of the machine, or at least a considerable reduction in the increase of the deflection caused by the oblique position of the cultivating members. This feature can be applied advantageously in rakes as well as in tedders, because in both cases the cultivating elements are only active along the front half of the cultivating member, i.e. they are situated in the immediate vicinity of the soil.

According to a further aspect of the invention, the machine comprises a supporting member including a crossbeam, of which the longitudinal centre is attached in the machine near the centre of the cultivating member, which crossbeam extends from near this centre laterally and slightly in forward direction, preferably at an angle of at least 10° relative to a line transverse to the direction of travel. Such a construction has the advantage of absorbing forces which are exerted on the machine in the direction of travel. According to a further advantageous embodiment of the invention, a pair of wheels includes a carrier being near its centre capable of swivelling about a swivel shaft, at the front and rear ends of which carrier there is provided a wheel that is rotatable about a horizontal shaft. According to again an other aspect of the construction, the machine comprises two pairs of wheels capable of swivelling independently of each other, of which the outermost wheels, measured in the lateral direction of the machine, are provided at a minimum mutual distance that corresponds approximately to the diameter of the rake member. Such a construction brings about that there will also be obtained a favourable restriction of the disadvantageous effects of the lateral deflection of the machine, i.e. transversely to the direction of travel. According to the invention, there is achieved a favourable embodiment, inter alia in order to reinforce the above-mentioned effect, when the front wheel of a pair is provided at the carrier side facing the longitudinal centre of the machine, and the rear wheel at the side facing away therefrom. According to the invention, a further improvement of the machine is obtained when all the wheels of the supporting member are positioned, seen in a plan view, at least partly in the front half of the rake member. According to an advantageous embodiment of the invention, this will result in that each of the wheels, taking into account the space required for swivelling about the swivel shaft, is positioned as closely as possible to the orbit of the rake members.

For a better understanding of the present invention and to show how the same may be carried into effect, reference will now be made, by way of example, to the accompanying drawings, in which:
Figure 1 shows, in a plan view, a machine according to the invention, connected with the lifting device of a tractor;
Figure 2 is a rear view of Figure 1;
Figure 3 shows, in a plan view, the supporting member for the machine according to the invention;
Figure 4 shows a view according to the arrow IV in Figure 3;
Figure 5 is a cross-sectional view taken on the line V-V in Figure 3;
Figure 6 is a view taken on the line VI-VI in Figure 5;
Figure 7 shows, in a view in accordance with Figure 4, a part of an alternative support for the machine according to the invention;
Figure 8 shows, in a view in accordance with Figure 3, a third embodiment of the machine according to the invention, and
Figure 9 is a side view according to the arrow IX in Figure 8.

In the drawings, corresponding parts have been indicated by the same reference numerals. Furthermore, the invention is by no means restricted to the embodiment shown and described here; it only serves to illustrate the inventive idea.

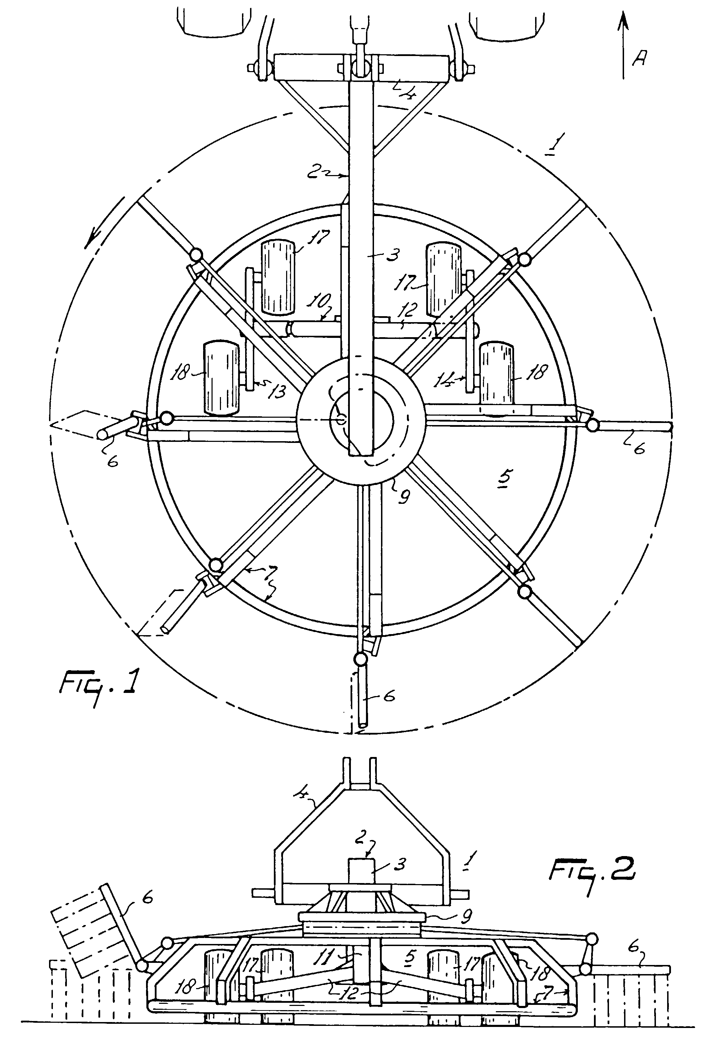

Figures 1 and 2 show a hay-making machine 1, in the present embodiment constituted by a rake having a working width of 3.20 m. In Figure 1 the rake is connected with the three-point lifting hitch of a tractor. For this purpose the machine comprises a frame 2 including a frame beam 3 extending in the direction of travel A and having at its front end a three-point trestle 4 provided with coupling elements. Near its rear ends, the frame beam is connected with a transmission box 9 which constitutes part of the drive of the machine 1. Beneath the frame beam 3, a (non-shown) power take-off shaft extends in the machine, which power take-off shaft constitutes the driving connection between the transmission box 9 and the power take-off shaft of the tractor. The transmission box 9 includes a central part being rigidly attached to the frame beam 3 and being concentrically surrounded by a second part that is pivotable about an imaginary vertically extending shaft and to which the frame 7 of a rake member, i.e. raking member 5, is attached. The raking member 5 includes rake members that are arranged along its circumference at a regular mutual distance and that are constituted in the present embodiment by raking elements 6. These raking elements 6 have a width of approximately 50 cm, measured in a radial direction, and are capable of pivoting about a shaft, via the drive from the transmission box 9, from an operative position into an inoperative position. The largest diameter of the frame 7 amounts to approximately 2.2 m.

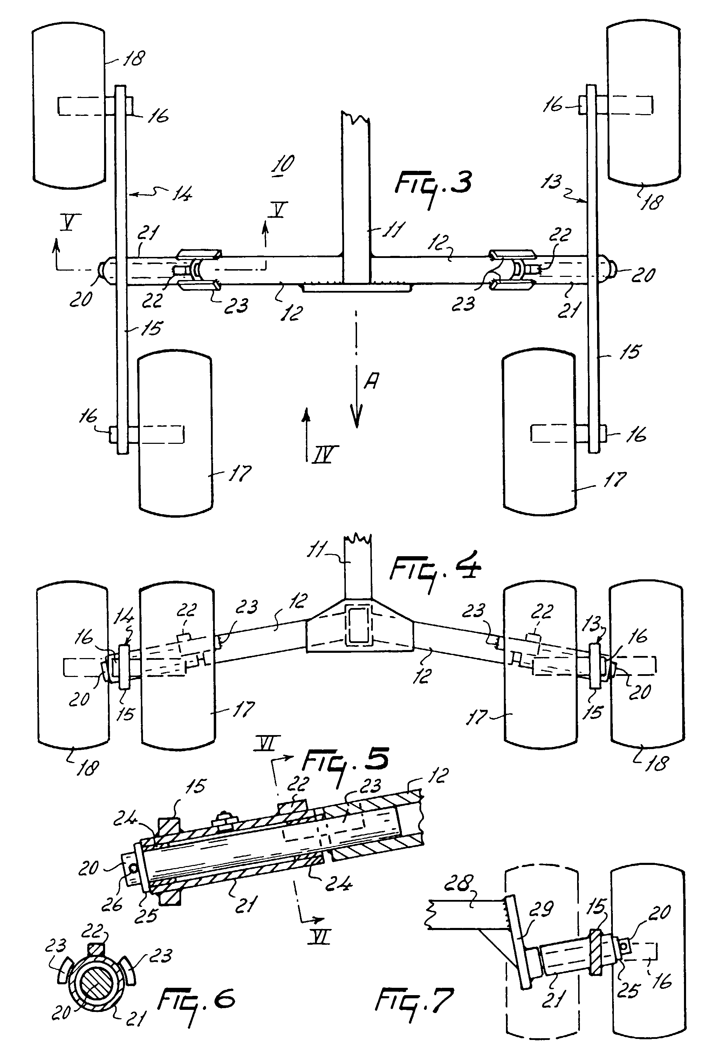

Against the bottom side of the transmission box 9 there is provided a forwardly and downwardly extending first supporting part 11 of a supporting member 10, which is shown separately and in greater detail in the Figures 3 and 4. Against the front end of the first supporting part 11 there is arranged a second supporting part in the form of a round crossbeam 12 extending transversely to the direction of travel A. This crossbeam 12 extends downwardly from its fastening point at an angle of at least 10° relative to a horizontal plane. Against both ends of the crossbeam 12 there is provided a pair of wheels 13, 14 that is pivotable about the longitudinal axis of this beam. A pair of wheels 13, 14 includes a carrier 15 which is orientated in the direction of travel A and which is provided, near its ends, with a shaft 16 for a wheel 17, 18, which shaft extends horizontally, transversely to the direction of travel A. Relative to the imaginary longitudinal centre line of the machine 1, the front wheel 17 is attached to the inside of the carrier 15 and the rear wheel 18 to the outside thereof. The wheels have a diameter of about 40 cm. Via a sleeve 21 that extends transversely to the direction of travel A, the carrier 15 is pivotably bearing-supported near its centre about a pivot or swivel shaft 20 extending in alignment with the crossbeam 12. The mutual distance in the direction of travel A between the wheel shafts 16 is about one and a half times a wheel diameter. Figure 5 shows in detail that for this purpose there is provided near the ends of the sleeve 21, between the sleeve 21 and the swivel shaft 20, a ring-shaped bearing 24 that, in the present embodiment, is made of a synthetic material. The carrier 15 is fixed to the swivel shaft 20 via a safety ring 25 provided therearound and via a safety pin 26 guided through the said shaft. On the sleeve 21 there is provided a stop element 22 which cooperates with stop elements 23 that are arranged on the crossbeam 12 and extend in alignment therewith over the sleeve 21. As is shown in Figure 6, the maximum pivotal turn of a pair of wheels 13, 14, from a horizontal starting position, is restricted to approximately 35° forwardly and rearwardly.

Figure 7 shows an alternative embodiment, in which the swivel shaft 20 of a pair of wheels 13, 14 extends vertically in an outward direction in such a way that, seen in a back view, it is situated at an angle of more than 10° relative to a horizontal plane. In this embodiment, the crossbeam 28 extends horizontally and is provided near its ends with a downwardly extending joint 29, which also extends to the outside at an angle of approximately 10°. Near the bottom side of the joint and transversely thereto, there is provided an outwardly directed pivot shaft 20 for the carrier 15.

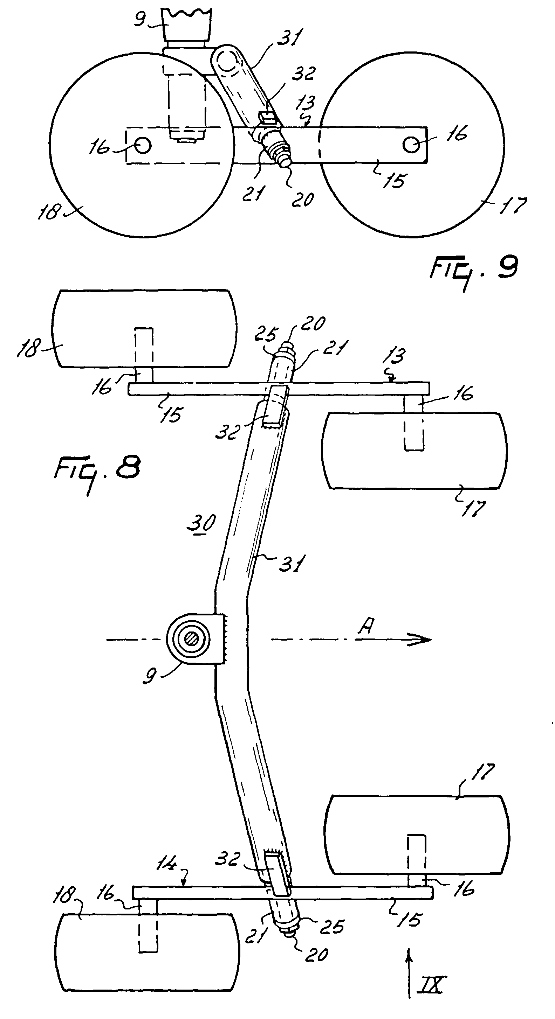

Figure 8 shows, in a plan view, an alternative embodiment 30 of the supporting member for the machine according to the invention. In this embodiment, a support 31 extends from near the transmission member 9 substantially sidewards, but also downwardly at an angle of at least 10° relative to a horizontal plane, and forwardly at an angle of also at least 10° relative to a line transverse to the direction of travel A, as is also shown in Figure 9. Furthermore, Figure 9 shows that the supporting member 10, 30 for the machine 1, via a clamp provided around a downward projection of the transmission box 9, is adjustable in height relative to the rake member 5 along this projection.

The operation of the machine will be further explained in what follows.

During operation of the machine, crop lying on the ground is raked via the rake members 6, this raking being restricted to the front side of the transverse centre line of the raking member 5. In the present embodiment, under the influence of a control mechanism in the transmission box 9, the raking members 6 are adjusted in an operative position, as shown in Figure 2 at the right-hand side of the machine 1, only during the front half of the orbit. In the rear half of the orbit, the raking members 6 are adjusted in the inoperative position as shown in Figure 2 at the left-hand side of the raking member 5, i.e. at a considerable height from the surface of the soil. Therefore, the operative zone of the machine extends along the front half of the circumference of the rake member.

According to the invention, the supporting member 10, 30 for the machine is attached in such a way that it is located at least substantially at the front side of the transverse centre line of the machine. Consequently, the supporting member 10, 30 is situated as closely as possible to the operative zone of the raking member 5. In order to position the wheels as closely as possible to the operative zone, the front wheel 17 of a pair of wheels 13, 14 is arranged relative to the rear wheel 18 at the inside of the carrier 15 which is orientated in the direction of travel, and the rear wheel 18 is provided at the outside thereof. When the said wheels meet with an unevenness in the surface of the soil, their position as closely as possible to the operative zone prevents the rake members 6 from getting more or less deep into the soil due to tilt. This might cause, under the influence of the forward tractive power of the tractor, the breaking down of tines or other machine parts, or might bring contaminations in the form of soil into the crop to be raked. The swivelling movement of a pair of wheels 13, 14 about the shaft 20 will result in that the influence of an unevenness in the soil on the height displacement of the raking members will be halved in many cases. The angle at which a pair of wheels 13, 14 is arranged pivotably about its shaft causes, together with the deflection of a wheel 17, 18 from a horizontal plane, a sideward movement of the wheel 17, 18. In this way, at least in many cases, the greatest depth or height of a local unevenness in the line of the direction of travel will be avoided, and there will also be obtained a more stable movement of the raking member 5.

The invention is not restricted to the aforementioned description, but also relates to all the details of the drawings. The invention furthermore relates to all sorts of alternatives in the construction, of course, falling within the scope of the following claims.

## Claims

1. A hay-making machine comprising at least one rake member (5), that is rotatable about an upwardly extending shaft, for cultivating crop lying on the soil, which rake member (5) is supported from the soil via a pair of wheels (13, 14) adapted to swivel about a swivel shaft (20) arranged transversely to the direction of travel (A), which pair of wheels (13, 14) includes at least two wheels (17, 18), one (17) of which is located in front of the swivel shaft (20) and one (18) therebehind, characterized in that the swivel shaft (20) is provided at an angle of at least 5° relative to the horizontal in such a way that, upon swivelling, the wheels (17, 18) of the pair of wheels (13, 14) are subjected to a lateral deflection from their normal operating position.

2. A hay-making machine as claimed in claim 1, characterized in that the pair of wheels constitutes part of a supporting member which includes two pairs of wheels (13, 14), each having two wheels (17, 18).

3. A hay-making machine as claimed in claim 2, characterized in that the machine is provided with a supporting member (10, 30) including a crossbeam (12, 31) that is orientated substantially transversely to the direction of travel and, from near its longitudinal centre, extends laterally in a downward direction, and which crossbeam includes, in its alignment, the swivel shaft (20) for a pair of wheels (13, 14).

4. A hay-making machine as claimed in claim 1, 2 or 3, characterized in that the supporting member (10, 30) is provided at least substantially at the front side of the transverse centre line of a cultivating member (5).

5. A hay-making machine as claimed in one or more of the preceding claims, characterized in that the supporting member (30) includes a crossbeam (31), of which the longitudinal centre is attached in the machine near the centre of the cultivating member (5), which crossbeam extends from near its centre laterally and slightly in forward direction, preferably at an angle of at least 10° relative to a line transverse to the direction of travel (A).

6. A hay-making machine as claimed in one or more of the preceding claims, characterized in that a pair of wheels (13, 14) includes a carrier (15) which, near its centre, is capable of swivelling about a swivel shaft (20), at the front and rear ends of which carrier there is provided a wheel (17, 18) that is rotatable about a horizontal shaft (16).

7. A hay-making machine as claimed in one or more of the preceding claims, characterized in that the machine comprises two pairs of wheels (13, 14) capable of swivelling independently of each other, of which the outermost wheels (18), measured in the lateral direction of the machine, are arranged at a minimum mutual distance that corresponds approximately to the diameter of the cultivating member (5).

8. A hay-making machine as claimed in one or more of the preceding claims, characterized in that the front wheel (17) of a pair of wheels (13, 14) is provided at the carrier side facing the longitudinal centre of the machine and the rear wheel (18) at the side facing away therefrom.

9. A hay-making machine as claimed in one or more of the preceding claims, characterized in that all the wheels (17, 18) of the supporting member (10, 30) are positioned at least partly in the front half of the cultivating member.

10. A hay-making machine as claimed in one or more of the preceding claims, characterized in that each of the wheels (17, 18), taking into account the space required for swivelling about the swivel shaft (20), is positioned as closely as possible to the orbit of the rake members (6).

## Patentansprüche

1. Heuwerbungsmaschine mit mindestens einem um eine aufwärts gerichtete Achse drehbaren Rechkörper (5) zum Bearbeiten von auf dem Boden liegendem Gut, wobei der Rechkörper (5) auf dem Boden über ein Räderpaar (13, 14) abgestützt ist, das um eine Drehachse (20) drehbar ist, die quer zur Fahrtrichtung (A) angeordnet ist, wobei das Räderpaar (13, 14) mindestens zwei Räder (17, 18) aufweist, von denen eines (17) vor der Drehachse (20) und eines (18) hinter dieser angeordnet ist,
dadurch gekennzeichnet, daß die Drehachse (20) in einem Winkel von mindestens 5° zur Horizontalen derart angeordnet ist, daß die Räder (17, 18) des Räderpaares (13, 14) beim Drehen aus ihrer normalen Arbeitslage seitwärts ausgelenkt werden.

2. Heuwerbungsmaschine nach Anspruch 1,
dadurch gekennzeichnet, daß das Räderpaar Teil eines Stützgliedes ist, das zwei Räderpaare (13, 14) mit jeweils zwei Rädern (17, 18) aufweist.

3. Heuwerbungsmaschine nach Anspruch 2,
dadurch gekennzeichnet, daß die Maschine ein Stützglied (10, 30) mit einem Querträger (12, 31) aufweist, der im wesentlichen quer zur Fahrtrichtung angeordnet ist und sich von seiner Mitte seitwärts nach unten erstreckt und in seiner Verlängerung die Drehachse (20) für ein Räderpaar (13, 14) enthält.

4. Heuwerbungsmaschine nach Anspruch 1, 2 oder 3,
dadurch gekennzeichnet, daß das Stützglied (10, 30) zumindest im wesentlichen vor der Quermittellinie eines Rechkörpers (5) angeordnet ist.

5. Heuwerbungsmaschine nach einem oder mehreren der vorhergehenden Ansprüche,
dadurch gekennzeichnet, daß das Stützglied (30) einen Querträger (31) aufweist, dessen Mitte nahe der Mitte des Rechkörpers (5) in der Maschine befestigt ist, und der sich von seiner Mitte seitwärts und leicht nach vorn erstreckt, vorzugsweise in einem Winkel von mindestens 10° zu einer quer zur Fahrtrichtung (A) verlaufenden Linie.

6. Heuwerbungsmaschine nach einem oder mehreren der vorhergehenden Ansprüche,
dadurch gekennzeichnet, daß ein Räderpaar (13, 14) einen Träger (15) aufweist, der nahe seiner Mitte um eine Drehachse (20) drehbar ist, wobei an den vorderen und hinteren Enden des Trägers ein Rad (17, 18) angeordnet ist, das um eine horizontale Achse (16) drehbar ist.

7. Heuwerbungsmaschine nach einem oder mehreren der vorhergehenden Ansprüche,
dadurch gekennzeichnet, daß die Maschine zwei unabhängig voneinander drehbare Räderpaare (13, 14) aufweist, deren äußere Räder (18) in Querrichtung der Maschine gemessen in einem minimalen Abstand voneinander angeordnet sind, der etwa dem Durchmesser des Rechkörpers (5) entspricht.

8. Heuwerbungsmaschine nach einem oder mehreren der vorhergehenden Ansprüche,
dadurch gekennzeichnet, daß das vordere Rad (17) eines Räderpaares (13, 14) auf der der Längsmittellinie der Maschine zugewandten Seite des Trägers und das hintere Rad (18) auf der von der Längsmittellinie abgewandten Seite angeordnet ist.

9. Heuwerbungsmaschine nach einem oder mehreren der vorhergehenden Ansprüche,
dadurch gekennzeichnet, daß alle Räder (17, 18) des Stützgliedes (10, 30) zumindest teilweise in der vorderen Hälfte des Rechkörpers angeordnet sind.

10. Heuwerbungsmaschine nach einem oder mehreren der vorhergehenden Ansprüche,
dadurch gekennzeichnet, daß jedes der Räder (17, 18) unter Berücksichtigung des für das Drehen um die Drehachse (20) benötigten Platzes so nahe wie möglich an der Kreisbahn der Rechkörper (5) angeordnet ist.

## Revendications

1. Machine de fenaison comportant au moins un organe formant râteau (5) qui peut tourner autour d'un arbre s'étendant vers le haut, pour traiter une récolte située sur le sol, lequel organe formant râteau (5) est supporté à partir du sol via une paire de roues (13, 14) adaptée pour pivoter autour d'un arbre de pivotement (20) agencé transversalement à la direction de déplacement (A), laquelle paire de roues (13, 14) comporte au moins deux roues (17, 18), dont une (17) est positionnée à l'avant de l'arbre de pivotement (20) et une (18) est positionnée à l'arrière de celui-ci, caractérisée en ce que l'arbre de pivotement (20) est agencé selon un angle d'au moins 5° par rapport à l'horizontale d'une manière telle que, lors d'un pivotement, les roues (17, 18) de la paire de roues (13, 14) sont soumises à une déviation latérale à partir leur position de fonctionnement normal.

2. Machine de fenaison selon la revendication 1, 2 ou 3, caractérisée en ce que la paire de roues constitue une partie d'un élément de support qui comporte deux paires de roues (13, 14), ayant chacune deux roues (17, 18).

3. Machine de fenaison selon la revendication 2, caractérisée en ce que la machine est munie d'un élément de support (10, 30) comportant une poutre transversale (12, 31) qui est orientée pratiquement transversalement à la direction de déplacement et, à partir de la proximité de son centre longitudinal, s'étend latéralement dans une direction vers le bas, et laquelle poutre transversale comporte, dans son alignement, l'arbre de pivotement (20) d'une paire de roues (13, 14).

4. Machine de fenaison selon l'une quelconque des revendications précédentes, caractérisée en ce que l'élément de support (10, 30) est agencé au moins pratiquement au niveau du côté avant de la ligne centrale transversale, d'un organe d'exploitation (5).

5. Machine de fenaison selon l'une quelconque des revendications précédentes, caractérisée en ce que l'organe de support (30) comporte une poutre transversale (31), dont le centre longitudinal est fixé à la machine à proximité du centre de l'organe d'exploitation (5), laquelle poutre transversale s'étend à partir de la proximité de son centre latéralement et légèrement dans la direction vers l'avant, de préférence selon un angle d'au moins 10° par rapport à une ligne transversale à la direction de déplacement (A).

6. Machine de fenaison selon l'une quelconque des revendications précédentes, caractérisée en ce qu'une paire de roues (13, 14) comporte un porteur (15) qui, à proximité de son centre, peut pivoter autour d'un arbre de pivotement (20), une roue (17, 18) qui peut tourner autour d'un arbre horizontal (16) étant agencée au niveau des extrémités avant et arrière du porteur.

7. Machine de fenaison selon l'une quelconque des revendications précédentes, caractérisée en ce que la machine comporte deux paires de roues (13, 14) pouvant pivoter indépendamment l'une de l'autre, dont les roues les plus à l'extérieur (18), dans la direction latérale de la machine, sont agencées à une distance mutuelle minimum qui correspond approximativement au diamètre de l'organe d'exploitation (5).

8. Machine de fenaison selon l'une quelconque des revendications précédentes, caractérisée en ce que la roue avant (17) d'une paire de roues (13, 14) est agencée au niveau du côté du porteur dirigé vers le centre longitudinal de la machine et la roue arrière (18) est au niveau du côté dirigé loin de celui-ci.

9. Machine de fenaison selon l'une quelconque des revendications précédentes, caractérisée en ce que toutes les roues (17, 18) de l'élément de support (10, 30) sont positionnées au moins partiellement dans la moitié avant de l'organe d'exploitation.

10. Machine de fenaison selon l'une quelconque des revendications précédentes, caractérisée en ce que chacune des roues (17, 18), en prenant en compte l'espace nécessaire pour le pivotement autour de l'arbre de pivotement (20), est positionnée aussi proche que possible de l'orbite des organes formant râteau (6).
